# FASCICULE DE BREVET EUROPEEN

(11) **EP 1 104 740 B1**
(45) Date de publication et mention de la délivrance du brevet: **08.02.2006**
(21) Numéro de dépôt: 00403352.8
(22) Date de dépôt: 30.11.2000
(51) Int. Cl.: B64C 13/22, B64C 13/28, F16D 21/06

(54) **Dispositif de surpassement manuel, notamment pour commande de vol d'un aéronef**
Manuelle Vorrangssteuervorrichtung, inbesondere für Flugsteuerungssysteme
Manual override device, in particular for aircraft flight control

(30) Priorité: 02.12.1999 FR 9915308
(43) Date de publication de la demande: 06.06.2001
(73) Titulaire: Goodrich Actuation Systems SAS, 78530 Buc (FR)
(72) Inventeur: Rodrigues, Fernand, 95230 Soisy sous Montmorency (FR)
(74) Mandataire: Texier, Christian

(56) Documents cités:
- US-A- 2 570 585
- US-A- 3 091 316
- US-A- 5 769 362

## Description

La présente invention est relative à un dispositif de surpassement manuel, notamment pour commande de vol d'un aéronef.

On connaît déjà, notamment pour certaines commandes de vol hydrauliques et en particulier pour des commandes de vol de gouverne de profondeur, des dispositifs de surpassement qui permettent au pilote de prendre la main par rapport au moteur électrique qui en fonctionnement normal actionne le circuit hydraulique de la commande. Un tel dispositif est connu de US-A-5,679,362.

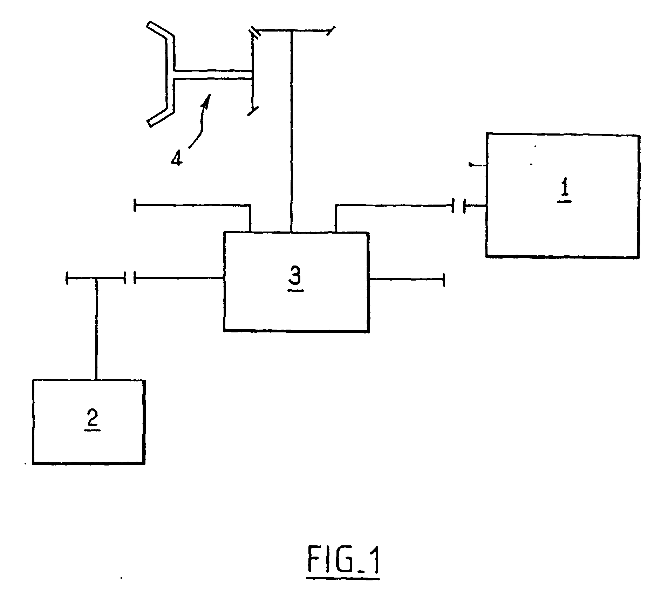

Sur la figure 1, on a représenté schématiquement un ensemble de commande qui comporte un distributeur hydraulique 1, un moteur électrique 2 et un dispositif de surpassement 3.

Le distributeur 1 est actionné, en fonctionnement normal, par le moteur électrique 2, lequel est lui-même commandé par un calculateur de vol.

Le dispositif de surpassement 3 permet au pilote de prendre la main par rapport à ce moteur électrique 2 et au calculateur et d'imposer à la gouverne de profondeur une commande manuelle, notamment en agissant sur des moyens de commande 4.

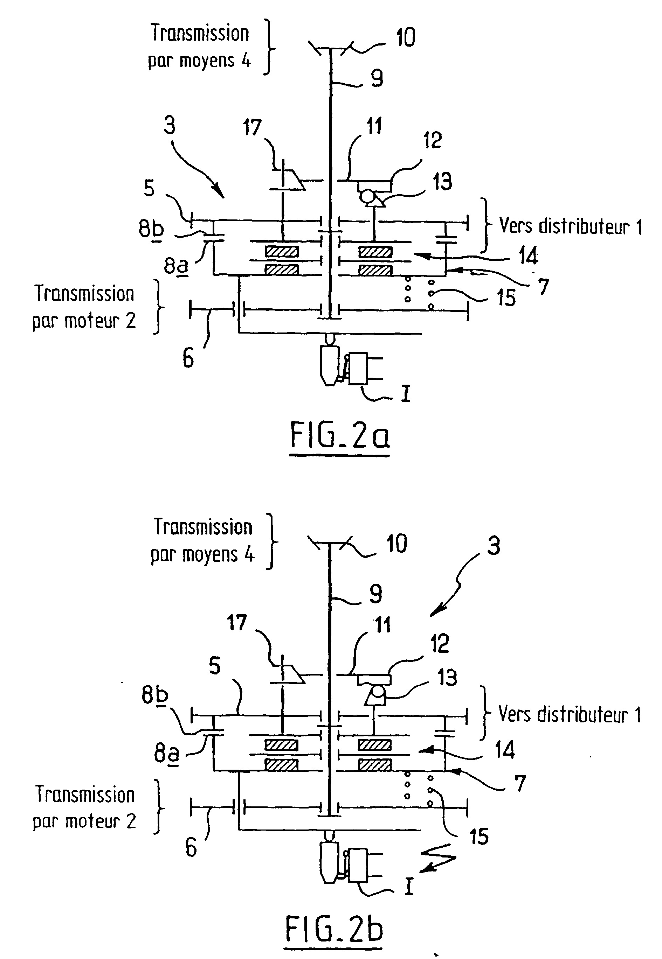

On a représenté schématiquement sur les figures 2a et 2b un dispositif de surpassement qui est actuellement utilisé pour les gouvernes de profondeur de certains avions.

Ce dispositif 3 comporte :
- une roue d'engrenage de sortie 5, qui engrène avec des moyens complémentaires du distributeur 1 de commande hydraulique,
- une roue d'engrenage d'entrée 6, qui est coaxiale à la roue d'engrenage 5 et qui engrène avec des moyens complémentaires d'une chaîne de transmission entraînée par le moteur électrique 2,
- un ensemble intermédiaire 7 qui est interposé entre les deux roues d'engrenage 5 et 6 en étant coaxial à celles-ci ; cet ensemble 7 est entraîné en rotation par la roue d'entrée 6 ; il comporte un jeu de cannelures 8a qui coopère avec de cannelures complémentaires 8b de la roue d'engrenage de sortie 5 pour, en fonctionnement normal, permettre à la roue d'entrée 6 d'entraîner la roue de sortie 5 via ledit ensemble intermédiaire 7,
- un arbre 9 qui est coaxial aux roues 5 et 6 et à l'ensemble intermédiaire 7 ; cet arbre 9 comporte d'une part un pignon 10 qui coopère avec des moyens complémentaires d'une chaîne de transmission, qui permet aux moyens d'actionnement 4 d'entraîner ledit arbre 9 ; il comporte d'autre part un plateau 11 qui présente une came 12 sur laquelle des moyens de roulement 13 que présentent l'ensemble intermédiaire 7 sont en appui ; il comporte en outre des moyens formant butée, schématisés par une fourche 17 sur les figures 2a et 2b, qui permettent à l'arbre 9 d'entraîner en rotation la roue 6, lorsque le pilote agit sur l'arbre 9.

Notamment, lorsque le pilote agit sur l'arbre 9 par l'intermédiaire des moyens 4, les moyens de roulement 13 se déplacent sur la came 12, de sorte que l'ensemble intermédiaire 7 est repoussé par rapport à la roue d'engrenage 6. Les cannelures complémentaires 8a, 8b se désengagent. La roue 6 de l'engrenage de sortie n'est alors plus entraînée par le moteur électrique 2. C'est le pilote qui, en mettant en appui les butées illustrées par la fourche 17, contrôle la rotation de ladite roue 6 et par conséquent le mouvement qui est imposé, par l'intermédiaire du système hydraulique, à la gouverne de profondeur.

Il est également prévu que l'ensemble intermédiaire comporte un jeu de disques de friction 14, ces disques de friction étant mis en prise les uns avec les autres par la compression d'un ressort hélicoïdal 15 interposé entre ledit ensemble 7 et ladite roue 5, lorsque les moyens de roulement 13 se déplacent sur la came 12 et que l'ensemble intermédiaire 7 est repoussé vers la roue 5 de l'engrenage d'entrée. Ce jeu de disques de friction permet alors de maintenir une certaine friction entre les roues d'engrenage 5 et 6 pendant tout le temps de la commande manuelle, la roue 6 n'entraînant toutefois la roue 5 que lorsque le pilote relâche l'effort qu'il exerce, par l'intermédiaire des moyens 4 sur l'arbre d'entrée 9.

Egalement, l'ensemble intermédiaire porte des moyens poussoirs qui agissent sur des interrupteurs I pour déclencher un signal donné à l'intérieur de l'habitacle de l'avion lorsque le pilote agit sur les moyens de commande manuelle et que l'ensemble intermédiaire est déplacé.

Toutefois, un dispositif de surpassement du type de celui qui vient d'être décrit présente un coût de réalisation important.

Un but de l'invention est de proposer une structure de dispositif de surpassement qui soit simplifiée et d'une réalisation moins onéreuse.

Un autre but de l'invention également est de proposer une structure de dispositif de surpassement qui permet une commande manuelle donnant au pilote des sensations de commande similaires à celles d'une commande manuelle classique.

Ainsi, l'invention a pour objet un dispositif de surpassement, notamment pour commande de vol, comportant une pièce de commande manuelle, une pièce d'engrenage d'entrée et une pièce d'engrenage de sortie qui sont montées co-axialement en rotation, des moyens étant interposés entre la pièce d'engrenage d'entrée et la pièce d'engrenage de sortie, pour, en fonctionnement normal, permettre à la pièce d'engrenage d'entrée d'entraîner en rotation la pièce d'engrenage de sortie, la pièce de commande manuelle portant en outre une came qui, en coopération avec des moyens complémentaires qui comportent une pièce intermédiaire apte à rouler sur ladite came, permet de désengager les moyens interposés entre la pièce d'engrenage d'entrée et la pièce d'engrenage de sortie sous l'effet d'un couple exercé sur la pièce de commande manuelle, le dispositif comportant également des moyens permettant alors à la pièce de commande manuelle d'entraîner la pièce d'engrenage de sortie.

Une caractéristique du dispositif proposé par l'invention tient en ce que les moyens d'entraînement qui sont interposés entre la pièce d'engrenage d'entrée et la pièce d'engrenage de sortie comportent un jeu de disques de friction et des moyens ressorts aptes à exercer un effort comprimant lesdits disques les uns sur les autres et en ce que la pièce intermédiaire apte à rouler sur la came porte au moins un élément formant poussoir qui, à l'issue d'un déplacement de la pièce intermédiaire sur la came sous l'effet d'un couple exercé sur la pièce de commande manuelle, vient exercer un effort qui s'oppose à celui des moyens ressorts et qui relâche l'effort de friction sur au moins une partie des disques.

Un tel dispositif est d'une réalisation simplifiée par rapport à celle de la structure illustrée en référence aux figures 2a et 2b : en particulier, il ne nécessite pas la fabrication de pièces présentant des cannelures d'entraînement ; l'entraînement de la pièce de sortie par la pièce d'entrée est en effet assuré par le jeu de disques de friction.

En outre, son nombre de pièces est plus réduit.

Un tel dispositif est avantageusement complété par les différentes caractéristiques suivantes prises seules ou selon toutes leurs combinaisons techniquement possibles :
- la pièce intermédiaire comporte des moyens formant butée qui, à l'issue d'un déplacement de la pièce intermédiaire sur la came sous l'effet d'un couple exercé sur la pièce de commande manuelle, viennent en appui sur au moins une surface complémentaire de la pièce de sortie, la pièce de commande manuelle entraînant alors la pièce intermédiaire et la pièce de sortie;
- une partie des disques de friction présente une zone d'appui sur laquelle l'élément formant poussoir vient en appui à l'issue d'un déplacement de la pièce intermédiaire sur la came ; de cette façon, la pièce d'entrée propose toujours au couple exercé par le pilote sur la pièce de commande manuelle un effort de signe contraire qui lui est transmis par l'intermédiaire des disques de friction qui restent en prise, de l'élément formant poussoir et de la pièce intermédiaire ; cette friction est importante dans la mesure où elle assure pour le pilote un point d'appui par rapport auquel il peut ajuster son effort.
- les autres disques de friction sont traversés par un évidement autorisant le déplacement de l'élément formant poussoir ;
- le jeu de disques de friction comporte une pluralité de disques de carbone alternant avec des disques métalliques ;
- le jeu de disques de friction comporte au moins cinq disques de carbone ;
- l'élément formant poussoir vient en appui sur deux disques du jeu de disques de friction;
- la pièce intermédiaire porte deux galets qui roulent sur la came.
- les axes des galets constituent des clavettes aptes à venir en appui sur des surfaces complémentaires de la pièce de sortie ;
- les axes des galets constituent des clavettes qui sont engagées dans une pièce cylindrique montée coulissante dans un fourreau qui prolonge co-axialement la pièce de commande manuelle, ladite pièce cylindrique étant entraînée en coulissement par rapport audit fourreau lorsque la pièce intermédiaire se déplace sur la came et constituant un poussoir apte à commander le basculement d'au moins un interrupteur ;
- le dispositif comporte un ressort hélicoïdal qui est interposé co-axialement entre la pièce intermédiaire et la pièce de sortie et qui assure un déplacement de retour de la pièce intermédiaire sur la came, lorsque l'effort sur la pièce de commande manuelle est relâché.

D'autres caractéristiques et avantages de l'invention ressortiront encore de la description qui suit. Cette description est purement illustrative et non limitative et doit être lue en regard des dessins annexés sur lesquels :
- la figure 1, déjà discutée, est un schéma synoptique illustrant la disposition d'un dispositif de surpassement dans une chaîne de commande ;
- les figures 2a et 2b sont des schémas synoptiques illustrant une structure de dispositif de surpassement qui pose un certain nombre de problèmes que l'invention se propose de résoudre ;
- la figure 3 est une représentation schématique en perspective d'un ensemble de surpassement conforme à un mode de réalisation possible pour l'invention ;
- la figure 4 est une représentation schématique en coupe de l'ensemble de surpassement de la figure 3 ;
- la figure 5 est une vue en coupe selon la ligne V-V de la figure 4.

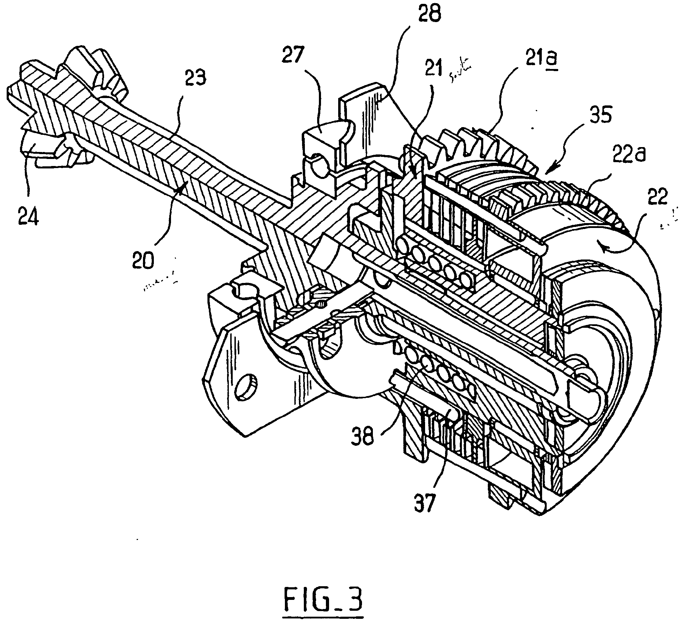

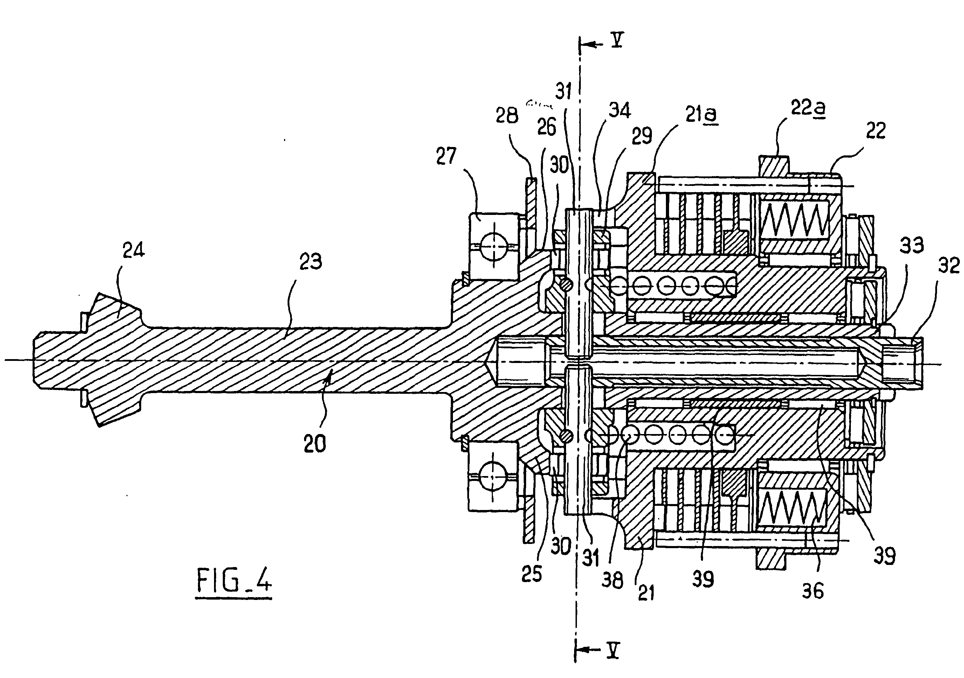

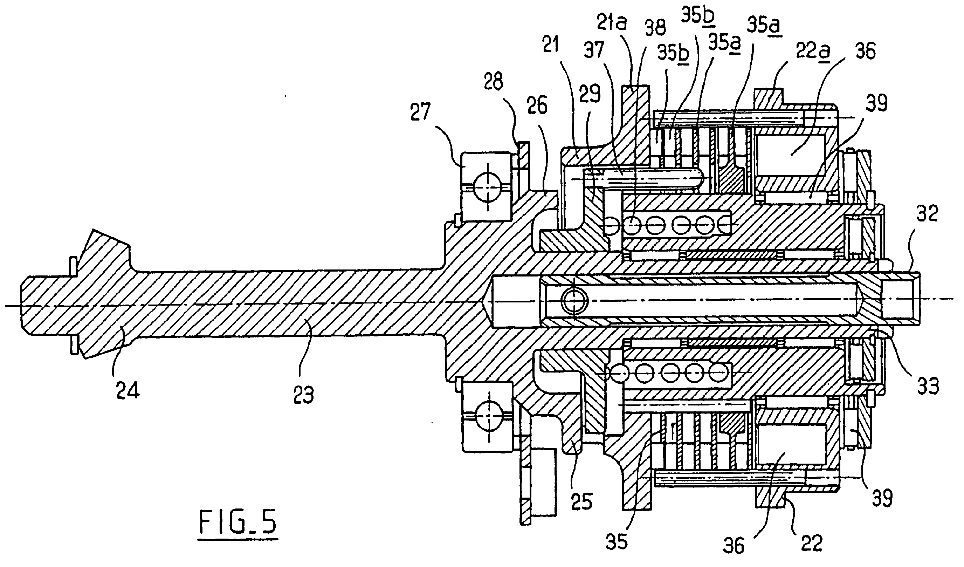

Le dispositif de surpassement qui est représenté sur les figures 3 à 5 comporte une pièce 20 de commande d'entrée manuelle, une pièce 21 d'engrenage de sortie dont une partie 21a constitue une roue dentée qui coopère avec des moyens complémentaires d'une chaîne de transmission permettant à ladite roue 21a d'actionner le distributeur d'un circuit hydraulique d'une commande de vol, une pièce 22 d'engrenage d'entrée dont une partie 22a constitue une roue dentée qui coopère avec des moyens complémentaires d'une chaîne de transmission permettant à un moteur électrique d'entraîner ladite pièce d'entrée 22.

La pièce 20 de commande manuelle présente un arbre 23 qui porte un pignon 24 destiné à engrener avec des moyens de démultiplication reliés mécaniquement à un levier de commande du pilote.

Cette pièce 20 est montée dans un palier 27 fixé sur le bâti - référencé par 28 - du dispositif de surpassement. Ce palier 27 autorise le pivotement de ladite pièce 20 autour de l'axe, référencé par A, de son arbre 23.

Les pièces 21 et 22 sont co-axiales à la pièce 20 et sont montées dans le bâti 28 en étant aptes à tourner autour de leur axe.

L'arbre 23 porte en outre un plateau 25 qui s'étend transversalement par rapport à l'axe dudit arbre 23 et qui définit une rampe de came 26.

Une pièce intermédiaire 29 porte-galets est interposée entre ce plateau 25 et la pièce de sortie 21.

Cette pièce 29 présente une forme générale de disque et est de même axe que les pièces 20 et 21.

Elle porte deux galets 30 qui sont diamétralement opposés l'un par rapport à l'autre sur la pièce 29 et qui sont montés en rotation autour d'axes 31 qui s'étendent radialement par rapport à l'axe de l'arbre 23.

Ces deux galets 30 roulent sur la rampe de came 26 du plateau 25, les pièces 20 et 21 étant conformées de façon à permettre à la pièce 29 de se déplacer le long de son axe, d'une position à une autre entre les pièces 20 et 21, lorsque ladite pièce 29 tourne par rapport à la pièce 20 et que les galets 30 roulent sur la rampe de came 26.

On notera à cet égard que la rampe 26 peut présenter une succession de plusieurs pentes. En variante, elle peut également présenter une pente évoluant sans discontinuité permettant un mouvement de commande manuel progressif, sans à-coups au niveau du couple que doit exercer le pilote.

Les axes 31 des galets 30 constituent en outre des clavettes qui à leur extrémité au voisinage de l'axe des pièces 20 et 29 sont engagées dans une pièce cylindrique 32 formant poussoir qui s'étend dans un fourreau complémentaire 33 qui prolonge axialement le plateau 25 du côté dudit plateau opposé à l'arbre 23. Les clavettes que constituent ces axes 31 permettent ainsi à la pièce intermédiaire 29 d'entraîner dans son déplacement axial la pièce cylindrique 32. Le déplacement du poussoir que constitue cette pièce cylindrique 32 permet, lorsque ledit poussoir sort de son fourreau, d'actionner des interrupteurs (non représentés) qui sont disposés au droit dudit poussoir et qui commandent à l'intérieur de l'habitacle de l'aéronef le déclenchement de signaux visuels ou sonores destinés à indiquer que la commande manuelle a pris la main par rapport à la commande électrique.

Par ailleurs, les axes 31 constituent des clavettes qui viennent en butée, à leur extrémité opposée à l'axe également, à leur extrémité opposée à l'axe des pièces 20 et 29, sur des surfaces d'appui 34 complémentaires que présente la pièce de sortie 29. De cette façon, lorsqu'un couple est exercé par le pilote sur la pièce 20, la pièce intermédiaire 29 tourne par rapport à la pièce de sortie 21 jusqu'à venir en butée sur les surfaces d'appui de la pièce de sortie 21. A ce moment là, les galets 30 roulent sur la rampe de came 26 jusqu'à une position de butée, puis la pièce 20 entraîne la pièce 21 de sortie par l'intermédiaire des clavettes que constituent les axes 31.

En outre, un ressort hélicoïdal 38 est monté entre la pièce intermédiaire porte-galets 29 et la pièce de sortie 21. Ce ressort hélicoïdal 38 permet de repousser la pièce intermédiaire porte-galets 29 dans sa position où elle est éloignée par rapport à la pièce 21, lorsque le pilote relâche son effort sur la pièce 20

Egalement, un jeu de disques de friction 35 est interposé entre la pièce de sortie 21 et la pièce d'entrée 22.

Ce jeu de disques de friction 35 est constitué de cinq disques de friction 35a en carbone interposés entre six disques de friction métalliques 35b, qui sont repoussés les uns sur les autres par l'intermédiaire de ressorts 36 qui sont logés dans des évidements prévus à cet effet dans la pièce d'entrée 22.

Ces ressorts 36, qui sont par exemple des ressorts hélicoïdaux, exercent contre ces disques de friction un effort qui est parallèle à l'axe des pièces du dispositif, de sorte que les disques de friction sont normalement en prise les uns avec les autres, la roue d'entrée 22 entraînant en rotation la roue de sortie 21.

La pièce intermédiaire 29 porte-galets comporte en outre un élément poussoir 37 qui s'étend parallèlement à l'axe A dans un évidement prévu à cet effet à travers les neufs premiers disques de friction 25 qui sont superposés à partir de la pièce 21.

Cet élément poussoir 37 est d'une longueur telle qu'il vient en appui sur les deux derniers disques de friction du jeu de disques 35, lorsque la pièce intermédiaire 29 s'est déplacée le long de l'axe A jusqu'à la position où elle est la plus proche de la pièce 21, du fait du roulement des galets 30 sur la rampe de came 26.

Ainsi, dans cette position de la pièce porte-galets 29, seuls les deux derniers disques de friction sont en prise, les autres disques de friction étant relâchés. La pièce 22 n'entraîne par conséquent plus la pièce 21 ; en même temps, un effort de friction est transmis par la pièce 22 à la pièce 20 de commande manuelle par l'intermédiaire des deux derniers disques de friction et. de la pièce intermédiaire 29, de sorte que le pilote ressent un certain couple s'opposant au mouvement qu'il impose à la pièce d'entrée 20.

On notera par ailleurs qu'il est prévu dans le dispositif un certain nombre d'aiguilles de roulement 39 qui assurent une excellente rotation des différentes pièces du dispositif. En outre, l'ensemble de la structure est maintenue dans un bain d'huile qui contribue également à éviter tout frottement.

Le fonctionnement de la structure qui vient d'être décrite est le suivant.

En fonctionnement normal, la pièce d'entrée 22 entraîne la pièce de sortie 21 par l'intermédiaire des disques de friction 35 qui sont alors tous maintenus en prise par les ressorts 36.

Par conséquent, le distributeur du circuit hydraulique est commandé par le moteur électrique, lequel est lui-même commandé par un calculateur de l'aéronef.

Lorsque maintenant le pilote décide de prendre la main sur le moteur électrique et le calculateur, il exerce sur la pièce 20 un effort qui dans un premier temps entraîne la pièce porte galets 29 en rotation par rapport à la pièce 21 jusqu'à ce que les clavettes 31 viennent en butée sur les surfaces d'appui complémentaires de ladite pièce 21. La pièce porte galets 29 est alors bloquée par ladite pièce 21, de sorte que la pièce 20 tourne par rapport à ladite pièce intermédiaire 29 et que les galets 30 roulent sur la rampe 26 du plateau 25. Le poussoir 37 est alors avancé dans son logement à travers les disques de friction 35 et vient en appui sur les deux derniers disques de friction, sur lesquels il exerce un effort s'opposant à celui des ressorts 36. L'effort qui s'exerçait sur les autres disques de friction est alors relâché de sorte que la pièce 22 n'entraîne plus la pièce 21, tandis qu'un effort de friction est transmis entre la pièce 22 et la pièce 20 par l'intermédiaire des deux derniers disques de friction et du poussoir 37.

A ce moment là, la pièce 21 est entraînée par le couple imposé par le pilote sur la pièce 20.

Le poussoir 32 est quant à lui sorti, de sorte que les interrupteurs qui commandent des signaux à l'intérieur de l'habitacle sont basculés.

Lorsque maintenant le pilote interrompt son effort sur la pièce 20 de commande manuelle, le ressort 38 repousse la pièce porte galets 29 de façon à ce qu'elle retrouve sa position initiale par rapport à la pièce 20.

Le poussoir 37 se désengage par rapport aux deux derniers disques de friction et les ressorts 36 exercent à nouveau leur effort sur l'ensemble des disques de friction 35. La pièce 22 entraîne à nouveau la pièce 21 par l'intermédiaire des disques de friction 35.

On notera que la structure de dispositif de surpassement qui vient d'être décrite permet au pilote d'exercer sa commande avec un couple d'actionnement relativement faible (de l'ordre de 0,2 mN par exemple).

Le dispositif de surpassement a été ici décrit dans le cas d'une commande de vol d'aéronef, ce qui constitue une de ses applications préférées. Il pourrait toutefois trouver application de façon plus générale dans tous les cas où il peut être nécessaire de prévoir un surpassement manuel dans une chaîne de transmission normalement entraînée par un moteur électrique.

## Revendications

1. Dispositif de surpassement comportant une pièce de commande manuelle (20), une pièce d'engrenage d'entrée (22) et une pièce d'engrenage de sortie (21) qui sont montées co-axialement en rotation, des moyens (35) étant interposés entre la pièce d'engrenage d'entrée (22) et la pièce d'engrenage de sortie (21), pour, en fonctionnement normal, permettre à la pièce d'engrenage d'entrée (22) d'entraîner en rotation la pièce d'engrenage de sortie (21), la pièce de commande manuelle (20) portant en outre une came (26) qui, en coopération avec des moyens complémentaires (37) qui comportent une pièce intermédiaire (29) apte à rouler sur ladite came (26), permet de désengager les moyens (35) interposés entre la pièce d'engrenage d'entrée (22) et la pièce d'engrenage de sortie (21) sous l'effet d'un couple exercé sur la pièce de commande manuelle (20), le dispositif comportant également des moyens (31) permettant alors à la pièce de commande manuelle (20) d'entraîner la pièce d'engrenage de sortie, les moyens d'entraînement qui sont interposés entre la pièce d'engrenage d'entrée (22) et la pièce d'engrenage de sortie (21) comportant un jeu de disques de friction (35) et des moyens ressorts (36) aptes à exercer un effort comprimant lesdits disques (35) les uns sur les autres, **caractérisé en ce que** la pièce intermédiaire (29) apte à rouler sur la came (26) porte au moins un élément formant poussoir (37) qui, à l'issue d'un déplacement de la pièce intermédiaire (29) sur la came (26) sous l'effet d'un couple exercé sur la pièce de commande manuelle (20), vient exercer un effort qui s'oppose à celui des moyens ressorts (36) et qui relâche l'effort de friction sur au moins une partie des disques (35).

2. Dispositif selon la revendication 1, **caractérisé en ce que** la pièce intermédiaire comporte des moyens (31) formant butée qui, à l'issue d'un déplacement de la pièce intermédiaire (29) sur la came sous l'effet d'un couple exercé sur la pièce de commande manuelle (20), viennent en appui sur au moins une surface complémentaire de la pièce de sortie (21), la pièce de commande manuelle (20) entraînant alors la pièce intermédiaire (29) et la pièce de sortie (21).

3. Dispositif selon la revendication 2, **caractérisé en ce qu'**une partie des disques de friction (35) présente une zone d'appui sur laquelle l'élément formant poussoir (37) vient en appui à l'issue d'un déplacement de la pièce intermédiaire (29) sur la came (26).

4. Dispositif selon la revendication 3, **caractérisé en ce que** les autres disques de friction sont traversés par un évidement autorisant le déplacement de l'élément formant poussoir (37).

5. Dispositif selon l'une des revendications précédentes, **caractérisé en ce que** le jeu de disques de friction (35) comporte une pluralité de disques de carbone (35a) alternant avec des disques métalliques (35b).

6. Dispositif selon la revendication 5, **caractérisé en ce que** le jeu de disques de friction (35) comporte au moins cinq disques de carbone (35a).

7. Dispositif selon les revendications 3 et 6 prises en combinaison, **caractérisé en ce que** l'élément formant poussoir (37) vient en appui sur deux disques du jeu de disques de friction (35).

8. Dispositif selon l'une des revendications précédentes, **caractérisé en ce que** la pièce intermédiaire porte deux galets (30) qui roulent sur la came (26).

9. Dispositif selon les revendications 2 et 8 prises en combinaison, **caractérisé en ce que** les axes des galets (30) constituent des clavettes (31) aptes à venir en appui sur des surfaces complémentaires de la pièce de sortie (21).

10. Dispositif selon l'une des revendications 8 ou 9, **caractérisé en ce que** les axes des galets (30) constituent des clavettes (31) qui sont engagées dans une pièce cylindrique (32) montée coulissante dans un fourreau (33) qui prolonge co-axialement la pièce de commande manuelle (20), ladite pièce cylindrique (32) étant entraînée en coulissement par rapport audit fourreau (33) lorsque la pièce intermédiaire (29) se déplace sur la came (26) et constituant un poussoir apte à commander le basculement d'au moins un interrupteur.

11. Dispositif selon l'une des revendications précédentes, **caractérisé en ce qu'**il comporte un ressort hélicoïdal qui est interposé coaxialement entre la pièce intermédiaire et la pièce de sortie et qui assure un déplacement de retour de la pièce intermédiaire sur la came, lorsque l'effort sur la pièce de commande manuelle est relâché.

12. Dispositif de surpassement pour commande de vol, **caractérisé en ce qu'**il est constitué par un dispositif selon l'une des revendications précédentes.

## Patentansprüche

1. Vorrichtung zur Vorrangssteuerung, die folgendes umfaßt: ein Teil zur manuellen Steuerung (20), ein Eingangseingriffteil (22) und ein Ausgangseingriffteil (21), die bezüglich Drehungen koaxial montiert sind, wobei Mittel (35) zwischen das Eingangseingriffteil (22) und das Ausgangseingriffteil (21) geschaltet sind, um es dem Eingangseingriffteil (22) im normalen Betrieb zu gestatten, das Ausgangseingriffteil (21) drehend anzutreiben, wobei das Teil zur manuellen Steuerung (20) außerdem einen Nocken (26) trägt, der es im Zusammenwirken mit komplementären Mitteln (37), die ein Zwischenteil (29) umfassen, das dafür eingerichtet ist auf dem Nocken (26) zu rollen, gestattet, die zwischen das Eingangseingriffteil (22) und das Ausgangseingriffteil (21) geschalteten Mittel (35) unter der Wirkung eines auf das Teil zur manuellen Steuerung (20) ausgeübten Drehmoments freizugeben, wobei die Vorrichtung auch Mittel (31) umfaßt, die es dem Teil zur manuellen Steuerung (20) dann gestatten, das Ausgangseingriffteil anzutreiben, wobei die zwischen das Eingangseingriffteil (22) und das Ausgangseingriffteil (21) geschalteten Antriebsmittel einen Satz Reibscheiben (35) umfassen sowie Federmittel (36), die dafür eingerichtet sind eine zusammendrückende Kraft der Scheiben (35) aufeinander auszuüben, **dadurch gekennzeichnet, daß** das Zwischenteil (29), das dafür eingerichtet ist auf dem Nocken (26) zu rollen, wenigstens ein Element trägt, das einen Ausdrücker (37) bildet, der am Ende einer Bewegung des Zwischenteils (29) auf dem Nocken (26) unter der Wirkung eines auf das Teil zur manuellen Steuerung (20) ausgeübten Drehmoments eine Kraft ausübt, die sich derjenigen der Federmittel (36) entgegensetzt und die die Reibungskraft auf wenigstens einem Teil der Scheiben (35) lockert.

2. Vorrichtung nach Anspruch 1, **dadurch gekennzeichnet, daß** das Zwischenteil Mittel (31) umfaßt, die einen Anschlag bilden, der am Ende einer Bewegung des Zwischenteils (29) auf dem Nocken unter der Wirkung eines auf das Teil zur manuellen Steuerung (20) ausgeübten Drehmoments auf wenigstens einer komplementären Fläche des Ausgangsteils (21) zur Abstützung kommt, wobei das Teil zur manuellen Steuerung (20) dann das Zwischenteil (29) und das Ausgangsteil (21) antreibt.

3. Vorrichtung nach Anspruch 2, **dadurch gekennzeichnet, daß** ein Teil der Reibscheiben (35) eine Abstützzone hat, auf der das den Ausdrücker (37) bildende Element am Ende einer Bewegung des Zwischenteils (29) auf dem Nocken (26) zur Abstützung kommt.

4. Vorrichtung nach Anspruch 3, **dadurch gekennzeichnet, daß** die anderen Reibscheiben von einer Aushöhlung durchzogen sind, die die Bewegung des den Ausdrücker (37) bildenden Elements gestattet.

5. Vorrichtung nach einem der vorhergehenden Ansprüche, **dadurch gekennzeichnet, daß** der Satz Reibscheiben (35) mehrere Karbonscheiben (35a) umfaßt, die sich mit Metallscheiben (35b) abwechseln.

6. Vorrichtung nach Anspruch 5, **dadurch gekennzeichnet, daß** der Satz Reibscheiben (35) wenigstens fünf Karbonscheiben (35a) umfaßt.

7. Vorrichtung nach Anspruch 3 in Verbindung mit Anspruch 6, **dadurch gekennzeichnet, daß** das den Ausdrücker (37) bildende Element auf zwei Scheiben des Satzes Reibscheiben (35) zur Abstützung kommt.

8. Vorrichtung nach einem der vorhergehenden Ansprüche, **dadurch gekennzeichnet, daß** das Zwischenteil zwei Rollen (30) trägt, die auf dem Nocken (26) rollen.

9. Vorrichtung nach Anspruch 2 in Verbindung mit Anspruch 8, **dadurch gekennzeichnet, daß** die Achsen der Rollen (30) Zapfen (31) bilden, die dafür eingerichtet sind, auf komplementären Flächen des Ausgangsteils (21) zur Abstützung zu kommen.

10. Vorrichtung nach einem der Ansprüche 8 oder 9, **dadurch gekennzeichnet, daß** Achsen der Rollen (30) Zapfen (31) bilden, die in ein zylindrisches Teil (32) eingreifen, das verschiebbar in einer Scheide (33) montiert ist, die koaxial das Teil zur manuellen Steuerung (20) verlängert, wobei das zylindrische Teil (32) gegenüber der Scheide (33) verschoben wird, wenn das Zwischenteil (29) sich auf dem Nocken (26) bewegt, und einen Ausdrücker bildet, der dafür eingerichtet ist, das Umschalten wenigstens eines Schalters zu steuern.

11. Vorrichtung nach einem der vorhergehenden Ansprüche, **dadurch gekennzeichnet, daß** sie eine schraubenförmige Feder umfaßt, die koaxial zwischen das Zwischenteil und das Ausgangsteil geschaltet ist und die eine Rückkehrbewegung des Zwischenteils auf dem Nocken bereitstellt, wenn die Kraft auf das Teil zur manuellen Steuerung gelockert wird.

12. Vorrichtung zur Vorrangssteuerung zur Flugsteuerung, **dadurch gekennzeichnet, daß** sie durch eine Vorrichtung gemäß einem der vorhergehenden Ansprüche gebildet wird.

## Claims

1. An override device comprising a manual control part (20), an inlet gear part (22), and an outlet gear part (21) which are mounted to rotate about the same axis, means (35) being interposed between the inlet gear part (22) and the outlet gear part (21) so that in normal operation the inlet gear part (22) rotates the outlet gear part (21), the manual control part (20) also carrying a cam (26) which, in co-operation with complementary means (37) of an intermediate part (29) suitable for following said cam (26), serves to disengage the means (35) interposed between the inlet gear part (22) and the outlet gear part (21) under the effect of torque exerted on the manual control part (20), the device also having means (31) then enabling the manual control part (20) to drive the outlet gear part, the drive means interposed between the inlet gear part (22) and the outlet gear part (21) comprising a set of friction disks (35) and spring means (36) suitable for exerting a force to compress said disks (35) against one another, the device being **characterized in that** the intermediate part (29) suitable for following the cam (26) carries at least one pusher-forming element (37) which, at the end of a displacement of the intermediate part (29) relative to the cam (26) under drive from torque exerted on the manual control part (20) exerts force opposing that of the spring means (36) and relaxes the friction force on at least some of the disks (35).

2. A device according to claim 1, **characterized in that** the intermediate part includes abutment-forming means (31) which, at the end of a displacement of the intermediate part (29) relative to the cam under drive from torque exerted on the manual control part (20), come to bear against at least one complementary surface of the outlet part (21), the manual control part (20) then driving the intermediate part (29) and the outlet part (21).

3. A device according to claim 2, **characterized in that** a portion of the friction disks (35) has a bearing zone against which the pusher-forming element (37) comes to bear at the end of a displacement of the intermediate part (29) relative to the cam (26).

4. A device according to claim 3, **characterized in that** the other friction disks have a recess passing through them to allow the pusher-forming element (37) to be displaced.

5. A device according to any preceding claim, **characterized in that** the set of friction disks (35) comprises a plurality of carbon disks (35a) alternating with metal disks (35b).

6. A device according to claim 5, **characterized in that** the set of friction disks (35) includes at least five carbon disks (35a).

7. A device according to claims 3 and 6 taken in combination, **characterized in that** the pusher-forming element (37) comes to bear against two disks of the set of friction disks (35).

8. A device according to any preceding claim, **characterized in that** the intermediate part carries two cam-follower wheels (30) which run on the cam (26).

9. A device according to claims 2 and 8 taken in combination, **characterized in that** the wheels (30) have axles constituting pins (31) suitable for coming to bear against complementary surfaces of the outlet part (21).

10. A device according to claim 8 or 9, **characterized in that** the axles of the wheels (30) constitute pins (31) which are engaged in a cylindrical part (32) slidably mounted in a sheath (32) which extends the manual control part (20) along its axis, said cylindrical part (32) being driven to slide relative to said sheath (33) when the intermediate part (29) moves relative to the cam (26) and constituting a pusher suitable for controlling the switching of at least one switch.

11. A device according to any preceding claim, **characterized in that** it includes a helical spring which is interposed coaxially between the intermediate part and the outlet part and which provides return displacement of the intermediate part relative to the cam when the force on the manual control part is released.

12. An override device for a flight control, **characterized in that** it is constituted by a device according to any preceding claim.
